# EUROPEAN PATENT SPECIFICATION

(11) **EP 0 870 210 B1**
(45) Date of publication and mention of the grant of the patent: **20.06.2001**
(21) Application number: 96945224.2
(22) Date of filing: 23.12.1996
(51) Int. Cl.: G02B 6/25, B08B 11/00

(54) **FIBER OPTIC CABLE CLEANER**
REINIGER FÜR FASEROPTISCHES KABEL
DISPOSITIF POUR NETTOYER UN CABLE DE FIBRES OPTIQUES

(30) Priority: 22.12.1995 US 577740; 07.06.1996 US 660644; 13.06.1996 US 664039; 29.10.1996 US 29328 P
(43) Date of publication of application: 14.10.1998
(73) Proprietor: MINNESOTA MINING AND MANUFACTURING COMPANY, St. Paul, Minnesota 55133-3427 (US)
(72) Inventor: COX, Larry, R., Austin, TX 78726-9000 (US)
(74) Representative: Hilleringmann, Jochen, Dipl.-Ing.
(86) International application number: US9620239
(87) International publication number: WO9723792

(56) References cited:
- EP-A- 0 391 111
- US-A- 4 637 089
- US-A- 5 381 498
- PATENT ABSTRACTS OF JAPAN vol. 011, no. 324 (P-628), 22 October 1987 & JP 62 108213 A (SUMITOMO ELECTRIC IND LTD;OTHERS: 01), 19 May 1987,
- NTT REVIEW, vol. 3, no. 3, 1 May 1991, pages 110-121, XP000240402 YASUHIRO ANDO ET AL: "ADVANCED OPTICAL CONNECTORS FOR SINGLE-MODE FIBERS"

## Description

The present invention generally relates to devices for preparing the terminal end of a telecommunications line (whether voice, data, video, etc.) so as to improve the quality of a connection in the line, and more particularly to a device for cleaning the end face of an optical fiber to be interconnected with another optical fiber or with an optoelectronic component.

Optical fibers have replaced copper wire as the preferred medium for carrying telecommunications signals. As with copper wire, it is necessary to provide for the interconnection of optical fibers, during installation, repair or replacement of the fibers, and to terminate the fibers onto active optical devices. There are generally two kinds of interconnection devices, splices and connectors. The term "splice" usually refers to a device which provides a permanent connection between a pair of optical fibers. The term "connector," in contrast, usually refers to a device which may be engaged and disengaged repeatedly, often with a different plug or receptacle. A connector may also refer to the plug portion of a fiber termination, which is attached to an optical device. Optical devices include, for example, optical sensors (photoelectric diodes) and light sources (LED's, laser diodes). The termination of an optical fiber may be indirect, i.e., the fiber may be connected to some other (passive) optical device such as a beam splitter or polarizer, before the light beam is directed to the active optical device. The present invention is generally directed to cleaning the terminal end face of an optical fiber to be used in a connector or splice, but these terms should not be construed in a limiting sense since the present invention may be used in plug and receptacle designs which provide a permanent or temporary connection or termination.

In the fiber optic connector described in US-A-5,381,498, the connector has a plug and a receptacle, the plug having a fiber-receiving, V-shaped groove for each fiber to be interconnected, with the end of the fiber terminating in the middle of the groove. The receptacle has a plate which retracts as the plug is inserted, whereby another fiber is lowered into the V-groove of the plug. Upon full insertion of the plug, the two fibers ends are in contact, and the fiber secured to the receptacle is elastically deformed to maintain a continuous compressive load between the terminal ends of the fibers. The connector provides for the quick disconnection and reconnection of a plurality of optical fiber pairs, without the use of ferrules or other alignment members. High strength fiber may be used to withstand repeated insertions and bowing of the fibers. The exact lengths of fibers (i.e., the relative locations of their terminal ends in the plug and receptacle) are not critical since tolerance is provided by the slack taken up in the bowed receptacle fiber (the terminal portion of the fiber secured to the plug does not bow, but always remains straight). The ends of the fibers may be prepared by simply cleaving and beveling; the end faces may optionally be cleaved at an angle (i.e., non-orthogonal to the fiber axis) to reduce signal reflections.

In the connector of US-A-5,381,498, it is incumbent upon the user or craftsperson installing the plug or receptacle to keep the terminal end faces of the fibers as clean as possible, to minimize losses in light transmission across the connection. Since this design is intended for repeated insertion of a plug into a receptacle, it is possible that the plug fiber ends will become contaminated while the plug is outside of the receptacle, and it is also possible for dust to enter the receptacle and contaminate the fibers therein. It therefore may become necessary to clean the fibers after they have been affixed to the plug or receptacle housing. When originally installing the fibers, they are commonly cleaved to yield a fractured end face which may be further polished or beveled, and then cleaned by wiping the end with a lint-free cloth which has been dipped in, e.g., isopropyl alcohol. This task is difficult to accomplish after installation, since in many designs, such as the receptacle of the connector of US-A-5,381,498, the fibers are located within a housing in such a manner that they are difficult to access.

Another fiber cable cleaner, sold by Molex, is essentially a box with a window, and a spool of lint-free cloth located in the box. By opening a door at the window, a portion of the cloth is exposed such that the fibers may be pushed against the cloth surface for cleaning. This design also requires that the fibers be freely exposed.

JP-A-7-287124 describes the use of a cleaning media to clean an optical fiber. A solvent is directed at the cleaning strips while a fiber end is held between the strips. This device, however, also requires the fiber to be exposed so that it can be inserted into the device, and further cleans the sides of the fiber but does not necessarily clean the fiber tip.

EP-A-0 391 111 discloses a device for cleaning the tip of an optical fiber retained in a connector comprising a tool body, means for releasably attaching said tool body to the connector, and cleaning media located in said tool body. The known device also includes an elastic body for urging the tip of the optical fiber towards said cleaning media when said tool body is attached to the connector.

It is the object of the present invention to provide a fiber optic cable cleaner which not only allows cleaning of fiber end faces which are otherwise inaccessible within a connector housing, but which further avoids the use of liquid solvents that must be applied to the fibers or cleaning media.

According to the invention this object is solved by a device as defined in claims 1, 8, and 14, respectively. The subclaims relate to preferred embodiments of the invention.

The present invention provides a device for cleaning the tip of an optical fiber retained in a connector, the device comprising a tool body, means for releasably attaching said tool body to the connector, cleaning media located in said tool body, and means for urging the tip of the optical fiber toward said cleaning media when said tool body is attached to the connector. The urging means is biased towards a first position in which the urging means does not affect the position of the fiber tip, and is movable from the first position to a second position in which the fiber tip is located proximate the cleaning media. Different embodiments are presented for cleaning fibers in a plug versus a receptacle (socket). In either embodiment, the cleaning media is preferably an adhesive strip. The adhesive strip may be wound on a supply spool located inside the tool body; in this case, it is preferably to provide an adhesive strip that has a release layer coated on a side of the strip opposite the adhesive side of the strip, to ensure that the adhesive layer does not peel away when the spool is advanced. Advancing the spool presents a fresh surface of the cleaning media to the tip of the optical fiber. It is most preferable that the optical fiber tip be generally perpendicular to the cleaning media when the tip contacts the media.

In the plug cleaner embodiment, the tool body has an opening for receiving the plug. If the plug has a movable door thereon to provide access to the fibers, then the tool body may be provided with means for actuating the door on the plug, such as a camming surface formed at the opening of the tool body, adapted to urge the door sideways upon insertion of the plug in the opening.

In the receptacle cleaner embodiment, the tool body has a forward end whose shape is adapted for entering the opening of the receptacle. The receptacle may have therein a tilt mechanism which can lift the fibers from their normal, operative position, into a cleaning position, and in this case the tool body includes means for actuating the tilt mechanism as the tool body enters the opening of the receptacle.

Simpler implements may be provided for either a plug or receptacle to move the fibers to an accessible position whereby they can be manually cleaned with a small strip of material having an adhesive layer at the end of the strip. In these designs, no cleaning media (i.e., adhesive tape) is located inside the tool body.

The invention will best be understood by reference to the accompanying drawings, wherein:
Figure 1 is a side view of a longitudinal section of one connector which may be cleaned using the present invention, the fiber optic connector including a plug and receptacle;
Figure 2 is a perspective view of the plug and receptacle of Figure 1, with a partial section revealing the bowed fibers in the plug interior;
Figure 3 is a perspective view of one embodiment of the plug used with the present connector, with a sliding door;
Figure 4 is a perspective view of another embodiment of the plug used with the present connector, with the plug shroud omitted to reveal interior details;
Figure 5 is a perspective view of one embodiment of the receptacle used with the present connector, with a hinged door having camming surfaces which cooperate with camming surfaces on the plug door;
Figure 6 is a sectional view of a tool used to clean the tips of the fibers in a plug;
Figure 7 is a sectional view of a tool used to clean the tips of the fibers in a modified receptacle;
Figure 8 is perspective view of another modified receptacle having a fiber positioning piece for cleaning;
Figure 9 is perspective view showing insertion of a plug into an alternate cable cleaner; and
Figure 10 is rear perspective view showing the plug fully inserted into the cable cleaner of Figure 9

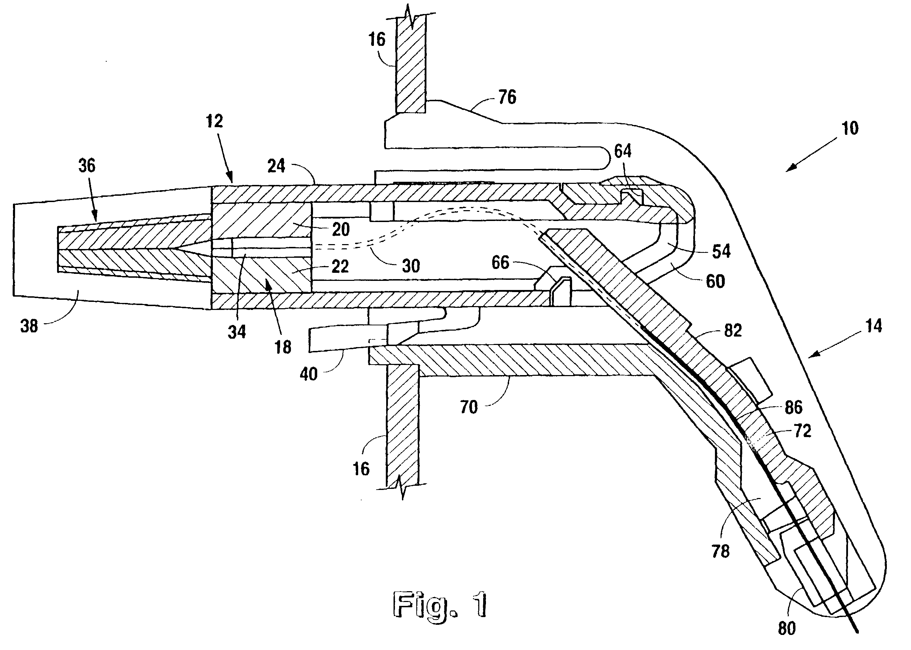

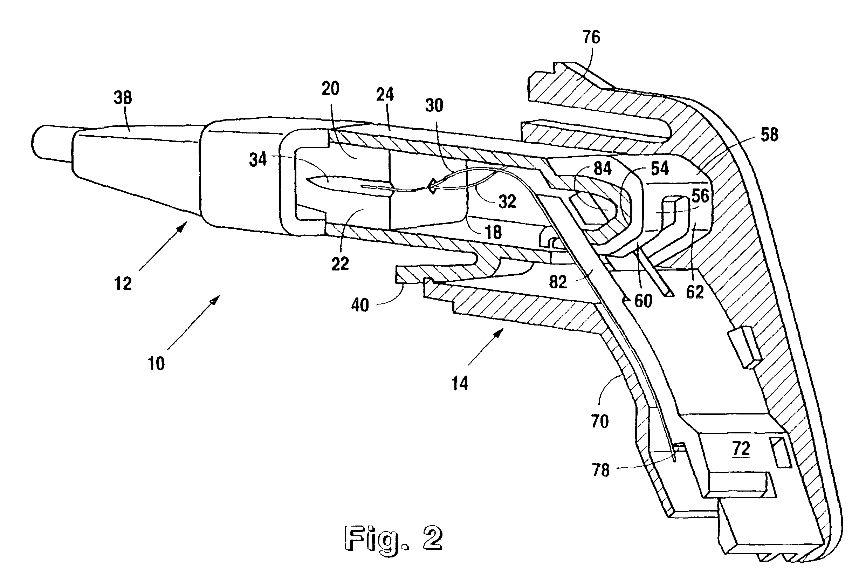

With reference now to the figures, and in particular with reference to Figures 1 and 2, there is depicted a connector **10** having optical fibers whose ends may be cleaned with the fiber optic cable cleaner of the present invention. Connector **10** is generally comprised of an elongate plug **12** and a socket or receptacle **14**. Figure 1 is a longitudinal section of connector **10** showing plug **12** fully inserted in receptacle **14,** and receptacle **14** mounted on a support surface or bulkhead **16**. Figure 2 is a perspective view with bulkhead **16** omitted, also with a partial longitudinal section to illustrate the interior of the connector. The depicted embodiment provides for the interconnection of two pairs of fibers, but those skilled in the art will appreciate that the inventive concepts described herein extend to single pair interconnection as well as interconnection of a multiplicity of pairs.

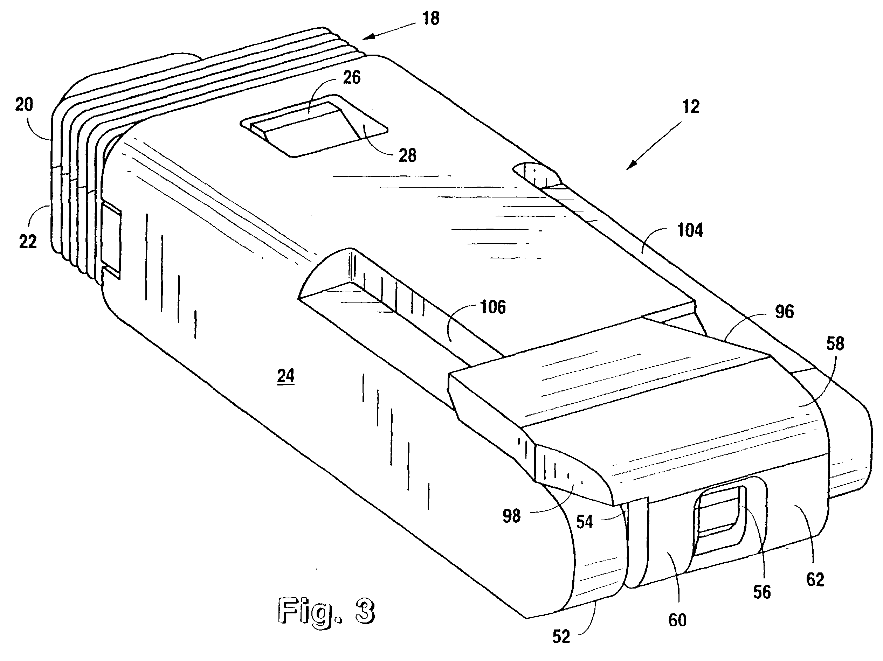

Plug **12,** shown also in Figure 3, includes a fiber holder **18** which may be constructed of two clamping elements or blocks **20** and **22,** and a plug body or shroud **24** which is attached to fiber holder **18.** Shroud **24** may be removably attached to plug fiber holder **18** by means of, e.g., latches **26** integrally molded onto blocks **20** and **22,** which engage cutouts **28** formed in corresponding walls of shroud **24.** Fibers **30** and **32** which are to be interconnected or terminated pass through holder **18** and into the hollow interior of shroud **24.** The terminal portions of the fibers are bare, that is, they are not affixed to any alignment member such as a ferrule. Shroud **24** therefore serves not only to assist in physically locating plug **12** in receptacle **14,** but also to provide protection for the otherwise exposed terminal portions of the fibers (the shroud could be made retractable to fully expose the fiber tips, if required). Holder **18** has fiber-receiving grooves **34** formed in the adjacent surfaces of blocks **20** and **22;** these two components may be identical parts. Holder **18** may secure the fibers, for example, by clamping, adhesives or both. Alternative means may be used to secure the fibers to holder **18**. Holder **18** may have an extension **36** surrounding the fibers for additional strain relief and clamping. A boot **38** may be provided for further strain relief and capturing of the strengthening members in the fiber cable (KEVLAR strands), and to assist in handling plug **12**. The strengthening members need not be crimped but they may be adhered onto the holder. Strain relief of the strengthening members is attained by a force fit of straightwall section of the plug fiber holder within the boot. This is dependent upon the choice of materials used for the boot and the plug fiber holder, and yields a design that does not require a crimp ring and which assists in ease of manufacture and reduces the number of needed components. Alternatively, an extension may be formed on the holder with a "torture" (irregular) path for clamping the strands and retaining the boot with an interference fit. "One-way" barbs on the surface of the plug fiber holder assist in the attachment of the boot to the plug fiber holder, which also assists in the attachment of the cable to the plug.

In the embodiment of Figures 1 and 2, a latch **40** is integrally molded onto one side of shroud **24** to releasably secure plug **12** to receptacle **14**. Latch **40** also imparts mechanical polarization to the plug, i.e., it can only be inserted into receptacle **14** in one orientation. Plug **12** may be biased in the interconnected position, e.g., by a springboard (a flexible cantilever) formed inside receptacle **14,** to be pushed back against latch **40** to minimize the effect of manufacturing tolerances.

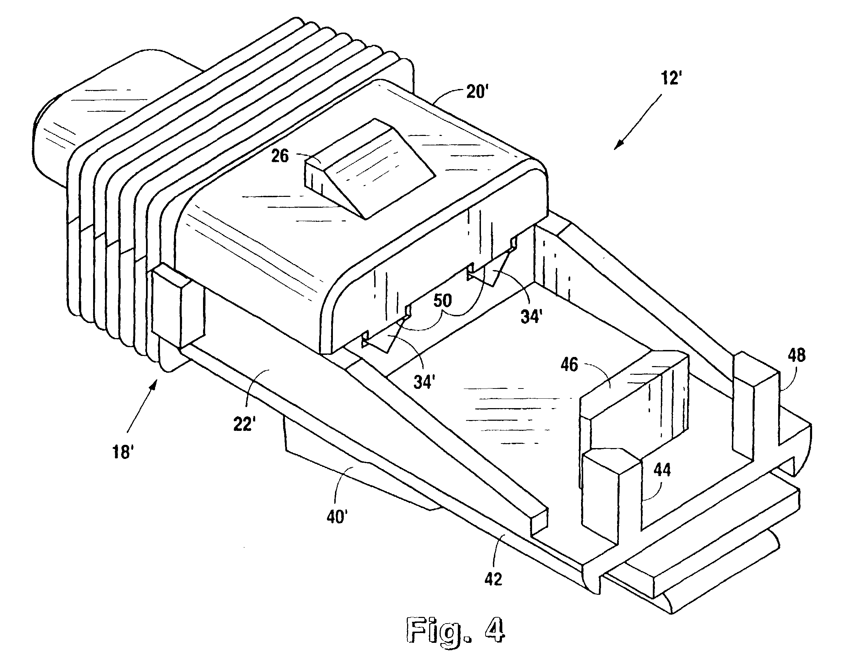

Figure 4 depicts a slightly different embodiment **12'** of a plug. This embodiment employs a similar shroud, which is omitted from Figure 4 to better illustrate the alternative fiber holder **18'** and interior features. Holder **18'** is again formed from two blocks **20'** and **22',** but those two blocks are not identical in this embodiment. First, block **22'** has an extension or landing **42** which has several upstanding posts **44, 46** and **48**. These posts serve to guide the fibers within shroud **24** in proper position for location in the V-grooves of receptacle **14** as discussed further below, and limit skewing of the fibers, ensuring proper alignment of the fiber tips with openings in shroud **24.** Latch **40'** is molded into block **22',** along the underside of landing **42.** Second, the fiber passageways in holder **18'** are formed by providing V-shaped grooves **34'** only in block **22',** with the corresponding surface of block **20'** being flat to provide only three fiber-clamping surfaces. V-grooves **34'** are further recessed in block **22',** and steps **50** are formed on block **20'** which seat in the recesses and facilitate proper attachment of the blocks together.

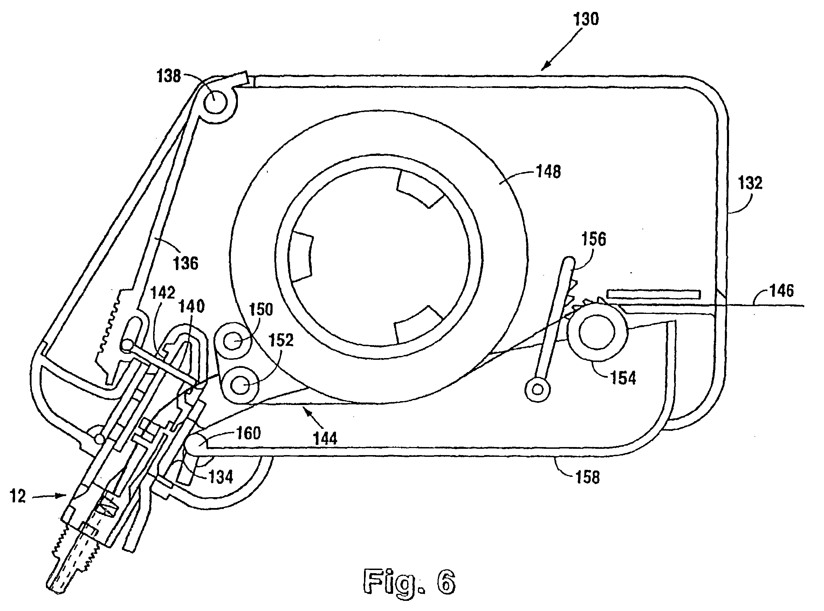

Fibers **30** and **32** extend generally straight within shroud **24** whenever plug **12** (or plug **12'**) is not installed in receptacle **14**. The fibers are "generally" straight in that they extend without significant bowing, although there might be some minute flexing of the fibers as a result of gravity. Sufficient space is provided within shroud **24,** however, to allow the fibers to bow significantly, as seen in Figures 1 and 2, when the plug is fully inserted into the receptacle. The forward end **52** of shroud **24** has a pair of slots **54** and **56** formed therein which provide access to the terminal ends of the fibers located within shroud **24**. A hood or door **58** is slidably attached to forward end **52** of shroud **24,** with two covers or bars **60, 62** which overlap slots **54** and **56,** respectively, when door **58** is in the closed position of Figure 3. When door **58** slides to the open position, bars **60** and **62** move to allow access to fibers **30** and **32** via slots **54** and **56,** respectively, without the need for the fibers to extend outside of shroud **24,** although this would be acceptable in alternative designs. Door **58** is slidably attached to shroud **24** with a snap fit resulting from two tongue-and-groove arrangements **64** and **66** (Figure 1). In addition to preventing dust from entering through the slots, door **58** also prevents any light in the plug fibers from escaping and injuring a user's eyes. As discussed below in conjunction with Figure 6, door **58** may also reveal, in the open position, one or more holes on the top of shroud **24** which may receive push rods to tip the fibers out openings **54** and **56** to allow cleaning of the fiber tips.

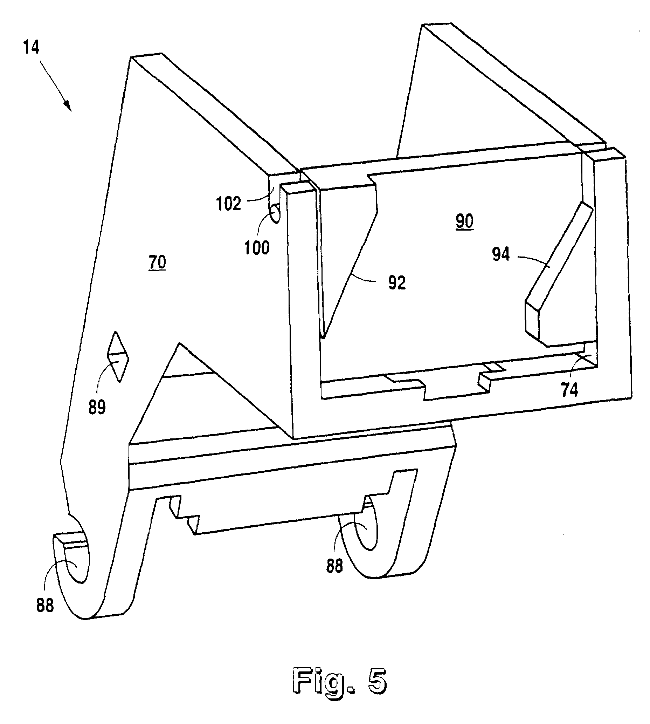

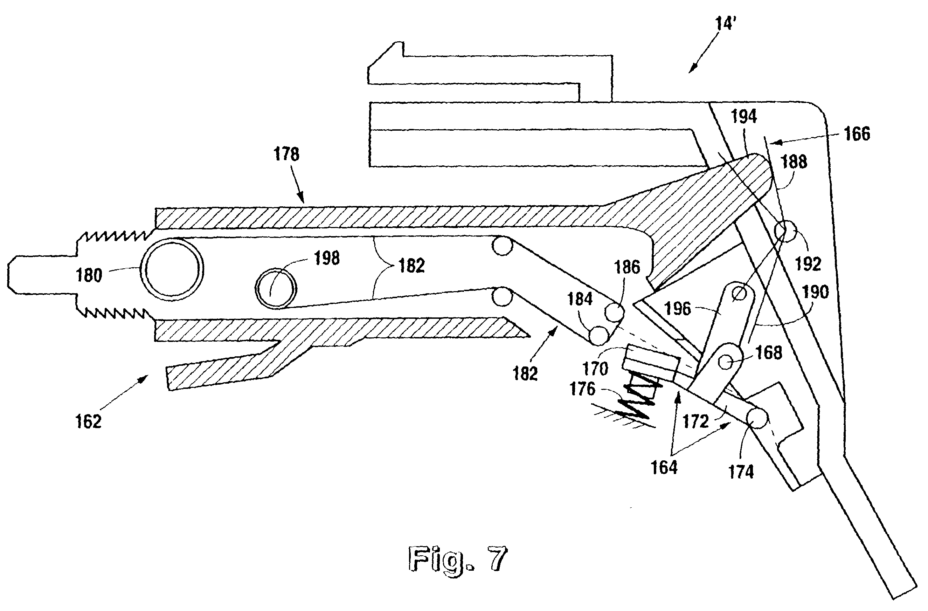

Receptacle **14,** also shown in Figure 5, includes a body or housing **70** and another fiber holder **72** (best seen in Figure 2). Housing **70** has an opening **74** whose size and shape generally corresponds to that of the forward end **52** of plug **12.** Housing **70** may also have appropriate features (such as latch arms **76)** allowing it to be releasably mounted to bulkhead **16** which may be, for example, a patch panel or workstation outlet (wall box faceplate). The latch means may provide for mounting from the front of the panel, to allow all preparatory work to be done at the front side of the panel, or may provide for mounting from the rear of the panel, to allow all preparatory work to be done at the back side of the panel. The receptacle fibers (only one of which, **78,** is visible in figures 1 and 2) are secured to receptacle fiber holder **72** by clamping as well, using a clamping plate **80** adapted to grip the fibers at a first end of holder **72.** The terminal ends of the receptacle fibers extend into fiber-alignment grooves formed in projections or fingers **82** and **84** at a second end of receptacle fiber holder **72**. The grooves are preferably V-shaped, although they may be more rounded, i.e., U-shaped. An intermediate section **86** of the fiber-alignment grooves is curved so as to maintain the receptacle fibers in the grooves by the elastic urging of the slightly bowed fibers. Additional means may be provided, such as the fiber hold-down shown in Figure 7, to retain the fibers firmly in the grooves. The fibers do not extend to the very tips of fingers **82** and **84** but rather terminate a sufficient distance from the tips to allow proper support of the plug fibers when the connector is in use. If the fiber-to-fiber contact occurs very near the tips of the V-grooves (or if the plug is inserted too far), the plug fiber can bend beyond the groove and lift away from the apex, breaking the connection.

Receptacle **14** may have as many of these fingers with fiber-alignment grooves as there are fibers in plug **12**. Fingers **82** and **84** are shaped to project into slots **54** and **56,** respectively, of shroud **24** when plug **12** is fully inserted into receptacle **14**. Fingers **82** and **84** enter shroud **24** at an oblique (nonzero) angle with respect the plug axis, i.e., the axis defined by either of the plug fibers **30** or **32** when they are extending straight within shroud **24**. This angle is preferably about 42°, which balances concerns regarding fiber end face contact pressure, fiber forces directed into the V-groove, the effects of friction, and the desired tolerance window (a larger angle increases tolerances). Since the receptacle fibers are not directed toward opening **74,** there is no danger of escaping light injuring a user's eyes. Receptacle fiber holder **72** is pivotally attached to housing **70** by providing posts on the first end of holder **72** which snap into cutouts or hooks **88** formed at one end of receptacle housing **70**. Holder **72** releasably locks into place using bumps or studs formed on the side of the holder, which engage holes **89** in receptacle housing **70**. An alternative design for the receptacle fiber holder may be used in which the holder is molded as a single piece with a breakaway top or cover plate that can snap onto its base, the base having the fiber-positioning grooves.

Receptacle **14** may also have a flap or door **90** to minimize entry of contaminants through opening **74**. The disclosed embodiment uses a receptacle door which cooperates with the plug door to actuate plug door **58** between closed and open states as plug **12** is inserted into receptacle **14**. Specifically, receptacle door **90** has two camming surfaces **92** and **94** which interact with camming surfaces **96** and **98,** respectively, on plug door **58**. Receptacle door **90** is hinged along one edge by providing posts **100** that snap into cutouts **102** in receptacle housing **70**. Means (not shown), such as a spring or camming linkages molded into the part, may be used to bias door **90** in the closed position. When plug **12** is inserted into receptacle **14,** forward end **52** and plug door **58** push against receptacle door **90,** raising and opening it. The ramped camming surface **94** then begins to forcibly abut camming surface **98** on plug door **58,** pushing door **58** to the side to reveal slots **54** and **56**. If plug **12** is thereafter removed from receptacle **14,** then ramped camming surface **92** similarly pushes against camming surface **96** as the plug is removed, sliding plug door **58** back into its closed position. Shroud **24** has grooves or indentations **104** and **106** to accommodate camming surfaces **92** and **94** when the plug is in the receptacle, which also serve to further stabilize the connection. Other door designs may be implemented with receptacle **14,** such as a door which manually opened outward and snapped shut.

All of the components of connector **10** (except plug boot **38**) may be formed of any durable material, preferably an injection moldable polymer such as polycarbonate, VALOX (a polyester sold by General Electric), or RADEL (a polyarylsulfone sold by Amoco). The material may include conductive fillers to render the components semiconductive in order to minimize triboelectric charging which can induce fiber end contamination. Boot **38** is preferably formed of low modulus copolyester elastomer such as that available from RTP of Winona, Minnesota, under material number 1559X67420B.

Assembly and installation of connector **10** is straightforward. Plug **12** is typically assembled in the factory, although it may easily be assembled in the field. In this regard, the term "pre-terminated" as used herein simply refers to the attachment of optical fibers to plug **12** or receptacle **14** regardless of whether such attachment occurs in the factory, the field, or elsewhere. It is also understood that plug **12** or receptacle **14** could be mounted on a jumper cable or patch cord with any kind of optical connector at the other end of the fibers. It is recommended that fibers be used which have a longer life when exposed to indoor environments, such as the high-strength fibers available from Minnesota Mining and Manufacturing Co. (3M). Those fibers have a conventional core and cladding which is surrounded by a novel three-layer construction, as discussed in U.S. Patent No. 5,381,504. Those skilled in the art will also appreciate that the connector can accommodate discrete optical fibers or multifiber ribbons, as well as both singlemode and multimode fibers, and that the cleaning device discussed below can be used with any such configurations.

Fibers which are to be pre-terminated to either plug **12** or receptacle **14** should be stripped, cleaved and cleaned. If the fibers are in the form of a ribbon which is part of a bundled group of ribbons in a cable, then a portion of the cable jacket must first be cut back to reveal the ribbons. Most cables have several protective layers, and each of these layers must be removed to provide access to the fiber ribbons. Similar steps must be taken to remove the protective layers of a cable having a single discrete fiber. After the fibers have been removed from the protective cable jacket, they are stripped. The stripped fibers are then ready for cleaving which may be accomplished using any one of several commercially available fiber cleavers, such as that shown in U.S. Patent No. 5,024,363. The cleave length for attachment of the fibers to plug **12** is the distance from fiber holder **18** which is about 23 mm. For attachment of fibers to receptacle **14,** the cleave length is the distance from fiber holder **72** which is about **15** mm. Any debris should be cleaned off the fibers using a lint-free cloth dipped in alcohol. Prior to removing the fibers from the cleaver, the craftsperson may inspect the fibers to confirm that the end faces on all fibers are acceptable, i.e., that they are smooth cleaves with no spikes. The fiber viewer disclosed in U.S. Patent No. 5,210,647 may be used for this purpose. Once the craftsperson is satisfied that each of the fibers has an acceptable end face, the fibers may be removed from the cleaver. The fiber end faces are preferably flat with a chamfered or beveled periphery (or at least partially beveled) to obtain the advantages associated with such a fiber end profile, as discussed more thoroughly in WO-A-95/07794. The fiber end faces may alternatively be radiused (generally spherical). The fibers may further optionally be provided with an asymmetric treatment, like cleaving so as to impart an angled end face, as taught in U.S. Patent No. 5,048,908. If so, in order to minimize insertion losses and reflections, the fibers should be inserted so that the orientation of the angled end faces of one set of fibers (i.e., in plug **12**) complements the orientation of the angled end faces of the other set of fibers (i.e., in receptacle **14**). For the plug fibers, fiber preparation may be done after the fiber cable has been threaded through boot **38**.

Final assembly of plug **12** comprises the simple steps of clamping the fibers in the V-grooves of holder **18** and snapping shroud **24** onto holder **18**. An assembly fixture may be used to guide shroud **24** onto the plug fiber holder so as to avoid damaging the fibers as they are inserted into the shroud. The ends of the plug fibers should terminate about 0.5 mm from the end of the shroud. Completion of receptacle **14** is also simple. The receptacle fibers are clamped onto fiber holder **72** using clamping plate **80,** with the ends of the receptacle fibers terminating in the fiber-alignment grooves about 15 mm from the tips of fingers **82** and **84**. The receptacle fibers may be cleaved after securing them to the fiber holder. The fibers may be assembled into the holder using the V-groove to actually pick up the fiber holder from the cleaver, to avoid contamination of the fiber tips, if mating and guiding features are provided on one or both parts. A punch-down tool could also be used to simplify assembly. Fiber holder **72** is attached to housing **70,** first by pushing the pivot posts into cutouts **88,** and then snapping the studs into holes **89.** Care should be taken during placement of the fibers in the V-grooves and attachment of the holder to the receptacle to not contaminate the fiber tips.

Installation of connector **10** is equally straightforward. Receptacle **14** is optionally mounted to any desired surface by convenient means, such as latching arms **76** (other constructions could be molded into housing **70** for custom mounting). Several receptacles could also be mounted in a single module, and they can be designed for front or rear loading, or sliding from the side. After receptacle **14** is mounted, the connection is completed by simply inserting plug **12** into opening **74**. Plug **12** is released from receptacle **14** by latch **40**.

Figures 1 and 2 depict full insertion of the plug. As plug **12** is inserted, door **90** opens and cams door **58** open as described above, allowing fingers **82** and **84** to enter slots **54** and **56** respectively. Plug fibers **30** and **32** contact the fiber-alignment grooves in fiber holder **72,** and slide until their end faces abut the respective end faces of the receptacle fibers, and then become bowed when the plug is fully inserted. The plug fibers may undergo an S-shaped bend. All force at the fiber-to-fiber interface comes from the resilience (elastic deformation) of bowed fibers **30** and **32** which maintains a continuous compressive load between the ends. Connector **10** is preferably designed to maintain a minimum bend radius of 7.6 mm (0.3 inch) on the fibers.

The dimensions of the various components of connector **10** may vary considerably depending upon the desired application. The following approximate dimensions are considered exemplary. Plug **12** has an overall length of 57 mm, a width of 12 mm, and a thickness of 8 mm, and plug fiber holder **18** provides clamping grooves that are 13 mm long. Plug shroud **24** extends 25 mm beyond holder **18,** providing an interior space which is 24 mm long, 10 mm wide and 6 mm high. Opening **74** of receptacle **14** is 12 mm x 10 mm. Its overall height and depth are 38 mm and 36 mm. Receptacle fiber holder **72** is 20 mm long (from the end where the fibers are clamped to the tips of fingers **82** and **84**), 12 mm wide and 1.5 mm thick. The fiber-alignment grooves in fingers **82** and **84** are 11.5 mm long and have a maximum depth of 2 mm which suitably accommodates most conventional optical fibers. The interior angle of the V-grooves should not be too narrow since this might result in excess friction with the fibers, but it also should not be too wide since this would not keep the fibers guided properly. A 90° interior angle is believed to be a good compromise.

With further reference to Figures 6 and 7, those figures depict tools according to the present invention, used to clean the tips of the various optical fibers. Figure 6 shows a tool **130** used to clean the tips of the fibers in plug **12.** Tool **130** has a body **132** adapted to be held in the hand, with an opening **134** in body **132** for receiving plug **12.** Tool **130** also has an actuation member or lever **136** pivotally attached to body **132** at **138.** In Figure 6, lever **136** is shown in the actuated position, in which state a push rod or tab **140** enters a hole or slot **142** in the top of the plug shroud, and contacts the plug fibers, forcing the fiber ends out of the shroud through slots **54, 56.** In the unactuated position, lever **136** swings away from opening **132** and retracts push tab **140** so that plug **12** can enter tool **130** without interfering with the push tab. Lever **136** is preferably biased toward the unactuated position by, e.g., a spring.

Opening **134** and lever **136** are located such that the plug fibers, when pushed through the shroud slots, are forcibly abutted against the adhesive side **144** of a strip of tape **146**. Tape **146** is peeled away from a tape roll **148** which is stored in tool body **132.** Two rollers **150** and **152** are provided to allow the tape to advance so that a fresh adhesive surface is presented to the fiber tips. To facilitate use, tape **146** may be wound about another roller **154** forming a ratchet wheel which engages a pawl **156.** Pawl **156** is in turn located on another handle or pivoting lever **158** attached to tool body **132** at **160**. In this manner, the user may advance the tape and clean the plug fibers by squeezing handle **158** while holding the tool. Handle **158** may also be biased by, e.g., a spring, toward the outermost position. In an alternate embodiment, lever **136** may be mechanically linked to rollers **150** and **152** such that the adhesive tape is presented to the fiber tip in a generally perpendicular orientation, such that the fiber is not dragged across the adhesive surface, but rather only the very end of the tip is touched to the adhesive surface.

Figure 7 shows a tool **162** used to clean the tips of the fibers in a modified receptacle **14**'. The shape of tool **162** is reminiscent of plug **12,** whereby it is adapted to be inserted into receptacle **14'** in a similar manner. Receptacle **14'** is generally identical to receptacle **14,** except for the provision of certain features designed to raise the receptacle fibers up out of the V-grooves for cleaning. These features include a fiber hold-down or retainer **164** and a tilt linkage **166.** Fiber retainer **164** is pivotally attached to the fiber holder at **168,** and includes a block or pad **170** located at one end of the retainer arm **172** adapted to push the fibers into the V-groove and keep them nested properly therein. Pad **170** may be molded into the fiber hold-down. The other end of retainer arm **172** has formed thereon a boss or button **174** which pushes against the receptacle fibers when retainer arm **172** is in the actuated position, as shown in Figure 7. Pushing of the fibers by boss **174** causes the fibers to deflect out of the V-grooves. Fiber retainer **164** is preferably biased, e.g., by a spring **176,** toward the unactuated position, i.e., pushing pad **170** against the fibers to maintain them in the V-grooves.

Tool **162** includes a body **178** which, like tool **130,** also houses a supply spool **180** of adhesive tape **182.** Rollers **184** and **186** serve to position tape **182** such that its adhesive side can again be advanced to clean the fiber tips. The fibers are deflected when tool **162** enters receptacle **14'** by means of tilt linkage **166,** which includes two tilt arms **188** and **190** fixed together at another pivot point **192.** A projection or actuator bump **194** formed on the front end of tool **162** pushes against tilt arm **188** as the tool is inserted into the receptacle. This in turn causes tilt arm **190** to rotate and push against a catch or finger **196** attached to fiber retainer **164**. Forcible contact between tilt arm **190** and finger **196** causes fiber retainer **164** to pivot about point **168,** thereby pushing boss **174** against the fibers and deflecting them out of the V-grooves. Tape **182** in tool **162** may be taken-up on another spool **198,** or exit tool body **178** in a manner similar to that shown in Figure 6 for tool **130.** A small dial or twist rod may be attached to take-up spool **198** and extend outside of body **178** to allow the user to advance the tape.

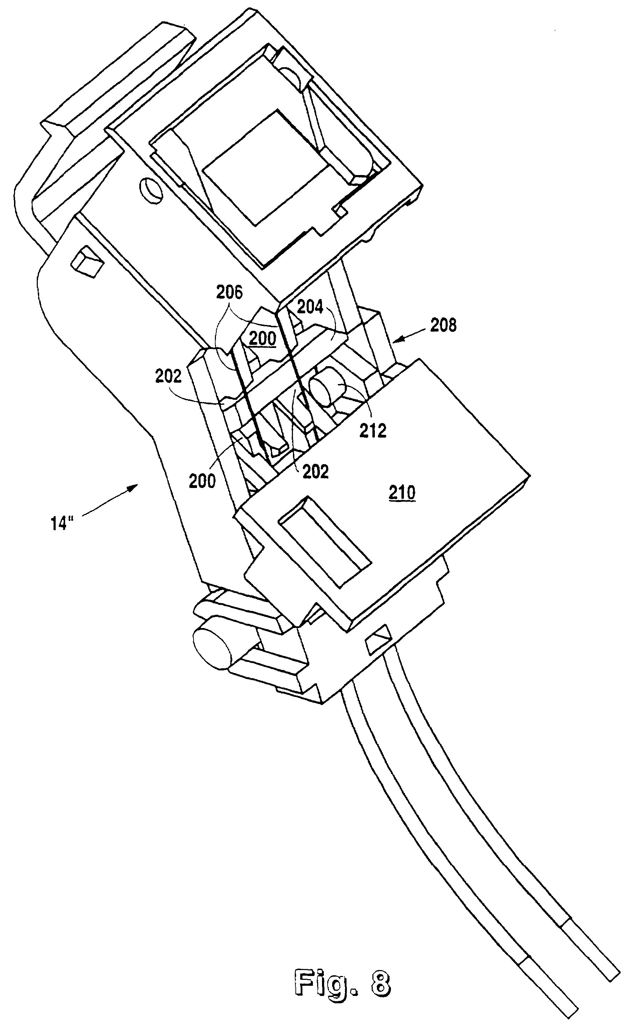

Another modified receptacle **14"** shown in Figure 8 also has a mechanism to move the fibers from their operative position to a cleaning position. In the embodiment of Figure 8, however, the fibers are lifted from underneath the V-grooves, rather than being pushed near a rearward portion of the fibers as in Figure 7. Specifically, receptacle **14"** has groove structures **200** which include cutouts or notches **202** such that the fibers span notches, and a fingerlike projection, or arm, **204** lies in notches **202**. Arm **204** may be raised, however, which lifts the fibers out of V-grooves **206** in a cleaning position, similar to that shown in Figure 7. In the embodiment of Figure 8, arm **204** is part of a fiber positioning piece **208** which also includes another arm or actuation lever **210,** and a trunnion or pivot pin **212.** The lower half of the receptacle housing must be repositioned or pivoted to allow temporary placement of the fiber positioning piece **208.** Arm **204,** actuation lever **210** and pivot pin **212** are preferably integrally molded of the same material as the housing of receptacle **14**", and fiber positioning piece **208** is attached by pivot pin **212** through a hole in the side of the receptacle housing. In this manner, when lever **210** is depressed, arm **204** will raise the fibers. An adhesive tipped applicator is manually positioned to facilitate cleaning of the fiber end face. The applicator is preferably flexible (to prevent mechanically damaging the fiber), and clear or transparent to allow viewing of the fiber as the adhesive tip of the applicator is brought into contact with the fiber end face.

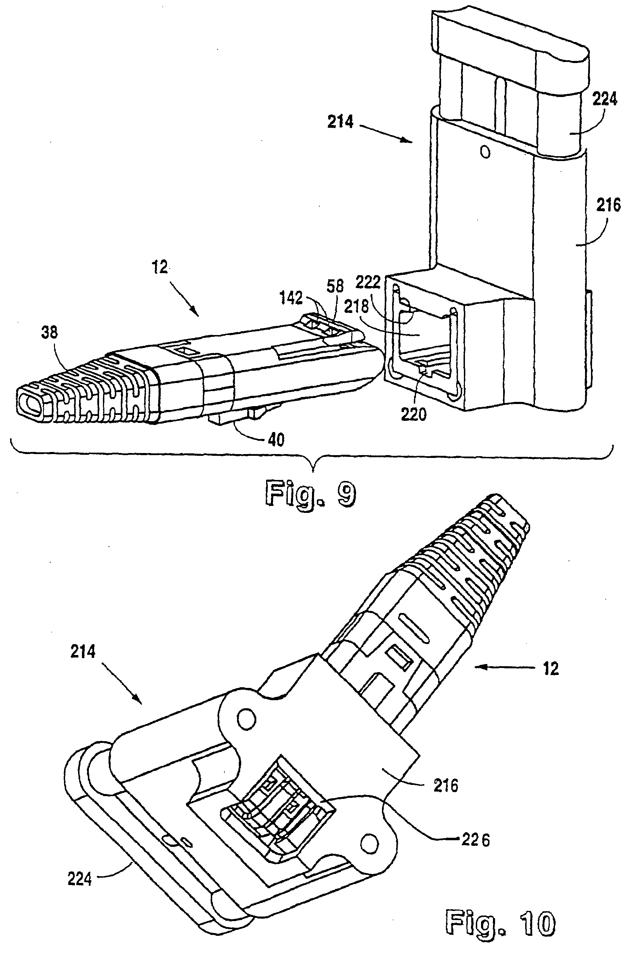

Figures 9 and 10 depict a modified cable cleaner for a plug, wherein the device still includes means for moving the tip of the fiber from an operative position to a cleaning position, but there is no cleaning media stored within the cable cleaner housing. Instead, an adhesive strip is again manually touched to the tips of the fibers, as with the device of Figure 8. The plug cleaner **214** of Figures 9 and 10 includes a tool body **216** having an opening **218** for receiving plug **12,** and appropriate features such as that indicated at **220** to ensure that the plug is properly oriented and retained in body **216.** A camming surface **222** is again provided to move door **58** of plug **12** sideways as the plug is inserted, so that the fibers therein may be accessed. Plug cleaner **214** further has an actuation member **224** slidably mounted in body **216.** Actuation member **224** has push rods, similar to push rods **140** (see Figure 8), and when actuation member **224** is fully inserted into body **216,** the rods enter holes **142** on door **58** and contact the fibers, urging them out of the plug body. The fibers are then exposed through another opening **226** on the opposite side of body **216** (Figure 10). The push rods preferably have V-shaped notches to control the outward movement of the fibers.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. For example, the cable cleaners are described for use with a connector in which the terminal portion of the fiber is bare and flexible, but the cleaner could easily be adapted to clean the ends of ferrule connectors as well. It is therefore contemplated that such modifications can be made without departing from the scope of the present invention as defined in the appended claims.

## Claims

1. A device for cleaning the tip of an optical fiber retained in a connector, the device comprising:
- a tool body (132),
- means (134) for releasably attaching said tool body (132) to the connector,
- cleaning media (148) located in said tool body (132), and
- means (136,140) for urging the tip of the optical fiber toward said cleaning media (148) when said tool body (132) is attached to the connector,
**characterized in that**
- said urging means (136,140) is biased toward a first position in which said urging means (136,140) does not affect the position of the fiber tip, and is movable from said first position to a second position in which the fiber tip is located proximate the cleaning media (148).

2. The device of claim 1 wherein said cleaning media (148) comprises an adhesive strip (146).

3. The device of claim 2 wherein said adhesive strip (146) is wound on a supply spool located in said tool body (132), and said adhesive strip has a release layer coated on a side of said strip opposite an adhesive side (144) of said strip (146).

4. The device of any one of claims 1 to 3 further comprising means (150,152) for moving said cleaning media (148) such that the optical fiber tip is generally perpendicular to said cleaning media (148) when the tip contacts said media (148).

5. The device of any one of claims 1 to 4 further comprising means (158) for moving said cleaning media (148) such that a fresh surface of said cleaning media (148) is presented to the tip of the optical fiber.

6. The device of any one of claims 1 to 5 wherein said tool body (132) has means for actuating a door at the connector movable for providing access to the fiber.

7. The device of claim 6 wherein said actuating means comprises a camming surface adapted to urge the door sideways upon insertion of the connector in said tool body (132).

8. A device for cleaning the tip of an optical fiber retained in a receptacle having an opening, the device comprising:
- a tool body (162) having a forward end whose shape is adapted for entering the opening of the receptacle,
- means for releasably attaching said tool body (162) to the receptacle,
- cleaning media (182) located in said tool body (162), and
- means (166) for urging the tip of the optical fiber from an operative position in which the fiber tip is spaced from said cleaning media (182) to a cleaning position in which the fiber tip is proximate to said cleaning media (182) to a cleaning position in which the fiber tip is proximate to said cleaning media (182) when said tool body (162) is inserted into the opening of the receptacle,
- wherein said urging means (166) is biased towards said first position.

9. The device of claim 8 wherein said cleaning media (182) comprises an adhesive strip.

10. The device of claim 9 wherein said adhesive strip is wound on a supply spool (180) located in said tool body (162), and said adhesive strip has a release layer coated on a side of said strip opposite an adhesive side of said strip.

11. The device of any one of claims 8 to 10 further comprising means (184,186) for moving said cleaning media (182) such that the optical fiber tip is generally perpendicular to said cleaning media (182) when the tip contacts said media (182).

12. The device of any one of claims 8 to 11 further comprising means for moving said cleaning media (182) such that a fresh surface of said cleaning media (182) is presented to the tip of the optical fiber.

13. The device of any one of claims 8 to 12 wherein:
- the receptacle has means (174) for moving the fiber, and
- said tool body (162) includes means (194) for actuating fiber moving means (174) such that, as said tool body (162) is inserted into the opening of the receptacle, the fiber moves from the operative position to the cleaning position.

14. A device for cleaning the tip of an optical fiber retained in a plug or receptacle, the device comprising:
- a tool body (216),
- means (218) for releasably attaching said tool body (216) to the connector, and
- moving means (224), attached to said tool body (216), for moving the tip of the fiber from an operative position to a cleaning position in which the tip of the fiber is accessible for cleaning the same by a cleaning media,
- wherein said moving means (224) is biased towards a position in which said fiber tip is maintained in said operative position.

## Patentansprüche

1. Vorrichtung zum Reinigen der Spitze einer in einem Verbinderstecker gehaltenen optischen Faser, wobei die Vorrichtung aufweist:
- einen Werkzeugkörper (132) mit einer Aufnahme zum Aufnehmen des Verbindersteckers,
- eine Einrichtung (134) zum lösbaren Befestigen des Werkzeugkörpers (132) am Verbinderstecker,
- Reinigungsmittel (148), die in dem Werkzeugkörper (132) angeordnet sind, und
- eine Einrichtung (136, 140) zum Drücken der Spitze der optischen Faser in Richtung der Reinigungsmittel (148), wenn der Werkzeugkörper (132) an dem Verbinder angebracht ist,
dadurch gekennzeichnet, daß
- die Andrückeinrichtung (136, 140) in eine erste Position vorgespannt ist, in der die Andrückeinrichtung (136, 140) die Position der Faserspitze in dem Verbinder nicht beeinträchtigt, und die Andrückeinrichtung gegen die Vorspannung aus der ersten Position in eine zweite Position bewegbar ist, in der die Faserspitze aus der normalen Betriebsposition im Verbinder bewegt ist und nahe den Reinigungsmittel (148) angeordnet ist.

2. Vorrichtung nach Anspruch 1, bei der die Reinigungsmittel (148) einen Klebestreifen (146) aufweisen.

3. Vorrichtung nach Anspruch 2, bei der der Klebestreifen (146) auf eine in dem Werkzeugkörper (132) angeordnete Vorratsspule gewunden ist, und der Klebestreifen eine Ablöseschicht aufweist, die auf der Seite des Klebestreifens aufgebracht ist, die der Klebeseite (144) des Streifens (146) entgegengesetzt ist.

4. Vorrichtung nach einem der Ansprüche 1 bis 3, ferner mit einer Einrichtung (150, 152) zum Bewegen der Reinigungsmittel (148) derart, daß die optische Faser im wesentlichen senkrecht zu den Reinigungsmittel (148) verläuft, wenn die Spitze die Mittel (148) berührt.

5. Vorrichtung nach einem der Ansprüche 1 bis 4, ferner mit einer Einrichtung (158) zum Bewegen der Reinigungsmittel (148) derart, daß eine frische Fläche der Reinigungsmittel (148) der Spitze der optischen Fasergegenüberliegt.

6. Vorrichtung nach einem derAnsprüche 1 bis 5, bei der der Werkzeugkörper (132) eine Einrichtung zum Betätigen einer Klappe am Verbinder aufweist, die für den Zugang zur Faser bewegbar ist.

7. Vorrichtung nach Anspruch 6, bei der die Betätigungseinrichtung eine Nockenfläche aufweist, welche die Klappe beim Einführen des Verbinders in den Werkzeugkörper (132) zur Seite drückt.

8. Anordnung mit einem Werkzeugkörper und einer Aufnahme zum Reinigen der Spitze einer optischen Faser, welche in der mit einer Öffnung versehenen Aufnahme gehalten ist, wobei:
- der Werkzeugkörper (162) ein vorderes Ende aufweist, dessen Form zum Eintreten in die Öffnung der Aufnahme ausgebildet ist,
- eine Einrichtung zum lösbaren Befestigen des Werkzeugkörpers (162) an der Aufnahme vorgesehen ist,
- Reinigungsmittel (182) im Werkzeugkörper (162) angeordnet sind, und
- eine Andrückeinrichtung (166) in der Aufnahme vorgesehen ist, die sich von einer ersten Position in eine zweite Position bewegt, um die Spitze der optischen Faser aus einer Betriebsposition, in der die Faserspitze von den Reinigungsmittel (182) beabstandet ist, in eine Reinigungsposition zu drücken, in der die Faserspitze in der Nähe der Reinigungsmittel (182) liegt, während der Werkzeugkörper (162) in die Öffnung der Aufnahme eingeführt wird,
- wobei die Andrückeinrichtung (166) in die erste Position vorgespannt ist.

9. Anordnung nach Anspruch 8, bei der die Reinigungsmittel (182) einen Klebestreifen aufweisen.

10. Anordnung nach Anspruch 9, bei der der Klebestreifen auf eine in dem Werkzeugkörper (162) angeordnete Vorratsspule (180) gewunden ist, und der Klebestreifen eine Ablöseschicht aufweist, die auf der Seite des Klebestreifens aufgebracht ist, die der Klebeseite des Streifens entgegengesetzt ist.

11. Anordnung nach einem der Ansprüche 8 bis 10, ferner mit einer Einrichtung (184, 186) zum Bewegen der Reinigungsmittel (182) derart, daß die optische Faser im wesentlichen senkrecht zu den Reinigungsmittel (182) verläuft, wenn die Spitze die Mittel (182) berührt.

12. Anordnung nach einem der Ansprüche 8 bis 11, ferner mit einer Einrichtung zum Bewegen der Reinigungsmittel (182) derart, daß eine frische Fläche der Reinigungsmittel (182) der Spitze der optischen Faser gegenüberliegt.

13. Anordnung nach einem der Ansprüche 8 bis 12, bei der:
- die Aufnahme eine Schiebeeinrichtung (174) zum Schieben der Faser aufweist, und
- der Werkzeugkörper (162) eine Einrichtung (194) aufweist, um die Faserschiebeeinrichtung (174) derart zu betätigen, daß beim Einführen des Werkzeugkörpers (162) in die Öffnung der Aufnahme die Faser von der Betriebsposition in die Reinigungsposition übergeht.

14. Vorrichtung zum Reinigen der Spitze einer in einem Verbinderstecker gehaltenen optischen Faser, wobei die Vorrichtung aufweist:
- einen Werkzeugkörper (216),
- eine Einrichtung (218) zum lösbaren Befestigen des Werkzeugkörpers (216) am Verbinder, und
- einer Bewegungseinrichtung (224), die am Werkzeugkörper (216) angebracht ist, um die Spitze der Faser in dem Verbinder aus einer Betriebsposition in eine Reinigungsposition zu bewegen, in der die Spitze der Faser freiliegt und von außen zum Reinigen durch Reinigungsmittel zugänglich ist,
- wobei die Bewegungseinrichtung (224) in eine Position vorgespannt ist, in der die Faserspitze nicht ergriffen ist und in der Betriebsposition verbleibt.

## Revendications

1. Un dispositif de nettoyage de la pointe d'une fibre optique retenue dans une fiche de connecteur, le dispositif comprenant :
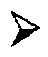 un corps (132) d'outil comprenant une douille pour recevoir ladite fiche de connecteur,
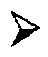 des moyens (134) destinés à attacher de façon démontable ledit corps (132) d'outil à la fiche de connecteur,
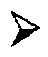 un milieu nettoyant (148) logé dans ledit corps (132) d'outil, et
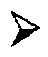 des moyens (136, 140) de sollicitation de la pointe de la fibre optique vers ledit milieu nettoyant (148) lorsque ledit corps (132) d'outil est attaché au connecteur,
caractérisé en ce que lesdits moyens de sollicitation (136, 140) sont rappelés vers une première position, dans laquelle lesdits moyens de sollicitation (136, 140) n'affectent pas la position de la pointe de fibre à l'intérieur de la fiche, et ils peuvent être déplacés, en opposition au rappel, de ladite première position vers une deuxième position dans laquelle ladite fibre a été éloignée de sa position normale de fonctionnement dans la fiche et se trouve logée à proximité du milieu nettoyant (148).

2. Le dispositif selon la revendication 1, dans lequel ledit milieu nettoyant (148) comprend une bande adhésive (146).

3. Le dispositif selon la revendication 2 dans lequel ladite bande adhésive (146) est enroulée sur une bobine de réserve logée dans ledit corps (132) d'outil, et ladite bande adhésive comprend une couche de décollement appliquée sur un côté de ladite bande opposé à un côté adhésif (144) de ladite bande (146).

4. Le dispositif selon l'une quelconque des revendications 1 à 3, qui comprend en outre un moyen (150, 152) de déplacement dudit milieu nettoyant (148) de façon que la pointe de la fibre optique soit généralement perpendiculaire audit milieu nettoyant (148) lorsque la pointe est au contact dudit milieu (148).

5. Le dispositif selon l'une quelconque des revendications 1 à 4 qui comprend en outre des moyens (158) de déplacement dudit milieu nettoyant (148) de façon qu'une surface fraîche dudit milieu nettoyant (148) soit présentée à la pointe de la fibre optique.

6. Le dispositif selon l'une quelconque des revendications 1 à 5 dans lequel ledit corps (132) d'outil inclut des moyens d'actionnement d'une porte agencée sur le connecteur et mobile de manière à permettre un accès à la fibre.

7. Le dispositif selon la revendication 6 dans lequel lesdits moyens d'actionnement comprennent une surface de came apte à solliciter la porte en direction latérale lors d'une insertion du connecteur dans ledit corps (132) d'outil.

8. Un ensemble comprenant un corps d'outil et une douille pour nettoyer la pointe d'une fibre optique retenue dans ladite douille qui inclut :
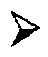 ledit corps (162) d'outil dont la configuration d'extrémité avant est adaptée à une introduction dans l'ouverture de la douille,
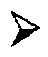 des moyens d'attache démontable dudit corps (162) d'outil à la douille,
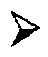 un milieu nettoyant (182) logé dans ledit corps (162) d'outil, et
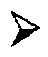 des moyens de sollicitation (166) contenu dans la douille et mobiles d'une première position à une deuxième position pour solliciter la pointe de la fibre optique à partir d'une position de fonctionnemént, dans laquelle la pointe de fibre est espacée dudit milieu nettoyant (182) vers une position de nettoyage dans laquelle la pointe de fibre est proche dudit milieu nettoyant (182) tandis que ledit corps (162) d'outil est inséré dans l'ouverture de la douille,
lesdits moyens de sollicitation (166) étant rappelés vers ladite première position.

9. L'ensemble selon la revendication 8, dans lequel ledit milieu nettoyant (182) comprend une bande adhésive.

10. L'ensemble selon la revendication 9, dans lequel ladite bande adhésive est enroulée sur une bobine de réserve (180) logée dans ledit corps (162) d'outil, et ladite bande adhésive comprend une couche de décollement appliquée sur un côté de ladite bande opposé à un côté adhésif de ladite bande.

11. L'ensemble selon l'une quelconque des revendications 8 à 10 qui comprend en outre un moyen (184, 186) de déplacement dudit milieu nettoyant (182) de façon que la pointe de la fibre optique soit généralement perpendiculaire audit milieu nettoyant (182) lorsque la pointe est au contact dudit milieu (182).

12. L'ensemble selon l'une quelconque des revendications 8 à 11 qui comprend en outre un moyen de déplacement dudit milieu nettoyant (182) de façon qu'une surface fraîche dudit milieu nettoyant (182) soit présentée à la pointe de la fibre optique.

13. L'ensemble selon l'une quelconque des revendications 8 à 12 dans lequel la douille inclut des moyens poussoir (174) pour pousser la fibre, et ledit corps (162) d'outil inclut des moyens (194) d'actionnement des moyens poussoir (174) de fibre d'une manière telle que la fibre se déplace de la position de fonctionnement vers la position de nettoyage au fur et à mesure que ledit corps (162) d'outil est inséré dans l'ouverture de la douille.

14. Un dispositif de nettoyage de la pointe d'une fibre optique retenue dans un connecteur de fibre optique, le dispositif comprenant :
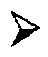 un corps (216) d'outil ;
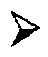 des moyens (218) destinés à attacher de façon démontable ledit corps (216) d'outil au connecteur, et
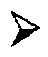 des moyens de déplacement (224), attachés audit corps (216) d'outil pour déplacer la pointe de la fibre contenue dans ledit connecteur à partir d'une position de fonctionnement vers une position de nettoyage dans laquelle pointe de la fibre est exposée et accessible de l'extérieur pour être nettoyée par le milieu nettoyant,
dans lequel ledit moyen de déplacement (224) est rappelé vers une position dans laquelle ladite pointe de fibre n'est pas au contact et peut rester dans ladite position de fonctionnement.
